Europäisches Patentamt
European Patent Office
Office européen des brevets

(11) Publication number: 0 274 203 A2

# EUROPEAN PATENT APPLICATION

(21) Application number: 87310221.4

(22) Date of filing: 19.11.87

(51) Int. Cl.4: C08G 16/00 , C08K 7/06 , C08L 61/00 , C07C 15/16 , C07C 25/22 , C07C 43/29

The title of the invention has been amended (Guidelines for Examination in the EPO, A-III, 7.3).

(30) Priority: 10.12.86 GB 8629556
10.12.86 GB 8629557

(43) Date of publication of application: 13.07.88 Bulletin 88/28

(84) Designated Contracting States: AT BE CH DE ES FR GB GR IT LI LU NL SE

(71) Applicant: IMPERIAL CHEMICAL INDUSTRIES PLC
Imperial Chemical House Millbank
London SW1P 3JF(GB)

(72) Inventor: Carey, John Gerard
St. Anns Windmill Lane
Appleton Warrington Cheshire(GB)
Inventor: Jones, Michael Edward Benet
40 Marbury Road
Vicars Cross Chester(GB)
Inventor: Wade, Philip
96 Ivy Street
Runcorn Cheshire(GB)

(74) Representative: Thomas, Ieuan et al
Imperial Chemical Industries PLC Legal Department: Patents PO Box 6 Bessemer Road
Welwyn Garden City Herts, AL7 1HD(GB)

(54) **Oligomers with pendant maleimide groups.**

(57) An oligomer comprising chains having more than one repeat unit

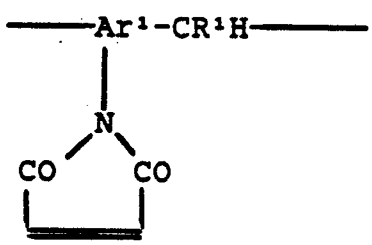

wherein $Ar^1$ is an aromatic group and $R^1$ is hydrogen or hydrocarbyl, a process for the preparation thereof and the use thereof as the matrix in fibre-reinforced composites are described.

EP 0 274 203 A2

## POLYMALEIMIDES

This invention relates to oligomers comprising in-chain arylene and alkylene residues, the preparation, the use thereof in polymerisable compositions, and to thermo-set resins prepared, therefrom.

It is known, for example from our published European Patent Specification No 112650, that the condensation of certain aromatic compounds, e.g. diphenyl oxide, with aldehydes or ketones, e.g. formaldehyde, produces oligomers which contain a variety of functional groups which are formed during the condensation reaction. As examples of such functional groups may be mentioned inter alia terminal hydroxymethyl groups; and in-chain ether groups, e.g. dibenzyl ether, and oxymethylene ethers, e.g. $ArCH_2-(OCH_2)_nOCH_2Ar$, where n is an integer. Where the condensation reaction is carried out in the presence of a compound which can act as a nucleophile, e.g. an alcohol (ROH), or carboxylic acid (RCOOH), which are often used as solvents or reagents respectively in such reaction mixtures, the residues of such compounds are often incorporated into the product to give, for example, $ArCH_2OR$ or $ArCH_2OOCR$.

The oligomers described in our aforesaid EP-A-112650 may provide the backbone precursors for high molecular weight aromatic resins, for example, thermosetting resins used in high performance applications, e.g. as the matrices in carbon fibre composites. In such uses, the presence of in-chain links and terminal groups other than those which are to be involved in desirable reactions, e.g. cross-linking or chain-extension, to produce the aforesaid aromatic resin, is often both undesirable and superfluous. The presence of the aforesaid undesirable and superfluous groups tends to limit the high temperature mechanical properties and to decrease the thermal and chemical stability of the cured resin. Furthermore, with certain aldehydes and ketones, e.g. chloral, or with less reactive aromatic compounds, e.g. biphenyl, the art teaches that it is often necessary to use a strong acid, e.g. sulphuric acid, as catalyst. We have now found that the use of sulphuric acid leads to the introduction of undesirable sulphonate groups on the aromatic nucleus thereby reducing the yield of resin.

In Japanese Patent No 58-152008, it is taught that certain N-aryl-maleimides, e.g. where the aryl group is phenylene bearing an aliphatic group, can be reacted with formaldehyde to produce oligomers which have in-chain arylene and methylene groups and pendant and/or terminal maleimide groups and it is suggested therein that the addition polymerisation of such oligomers can be used to prepare cross-linked thermosets. However, we have now found that under the conditions taught in Japanese 58-152008 the reaction of N-phenyl-maleimide with formaldehyde does not produce a chemically homogeneous mixture of oligomers in which the maleimide groups are intact but produces a gross mixture.

We have now found that where the aforesaid reaction of an aromatic compound with an aldehyde or ketone is carried out in the presence of certain acid catalysts as hereinafter defined, it is possible to obtain oligomers which bear less of the aforesaid undesirable residues and in which alkylene groups, e.g. methylene, are often the only links between the aromatic residues. Furthermore, these certain acid catalysts allow the use of less reactive aromatic compounds, e.g. benzene and biphenyl, or less reactive aldehydes, e.g. chloral and fluoral, in the aforesaid reactions. The conditions hereinafter defined (in the second aspect of the present invention) avoid the use of sulphuric acid which tends to effect competing sulphonation of the aromatic nucleus.

There is a continuing demand for improvements in high-performance cross-linked polymers. For example, in the case of the classical cross-linked polymers used in fibre-reinforced composites, e.g. epoxy resins, in an attempt to increase the working temperature which they can withstand, the cross-link density has been increased, e.g., by in the case of epoxy resins, using an epoxide component which bears greater than two epoxide groups in each monomer. However, the use of high functionality to afford high cross-linked density and high Tg often compromises the toughness of the cross-linked product.

Moreover, attempts have been made to combine high working-temperature with low cross-link density in the cross-linked polymer, e.g. by curing an oligomer having reactive groups at the ends of long oligomer chains. Whereas there is a tendency for the cross-linked products prepared from such oligomer chains to be able to withstand high surface temperature, e.g. 190°C, the aforesaid long oligomer chains often have (i) unacceptably high softening points such that the ease of controllability of the reaction thereof in melt fabrication is impaired, and/or (ii) limited solubility in the low boiling solvents which are used in the preparation of composite pre-pregs.

It is known from, for example, US 2,444,536 that aromatic bis-or oligo-maleimides can be prepared by the reaction of aryl di-primary amines or oligo-aryl primary amines with maleic anhydride to give, for example, a bis-maleimide of the general formula I:

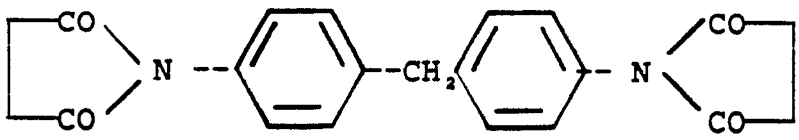 I

On curing, such bis-or oligo-maleimides give rise to highly cross-linked products which are brittle.

We have now found that certain N-aryl maleimides, as hereinafter defined, optionally in the presence of a further aryl compound, can be reacted with an aldehyde or ketone, e.g. formaldehyde, under the conditions defined in the second aspect of the present invention to form an oligomer which has in-chain aromatic and alkylene groups and pendant (and/or terminal) maleimide residues. Further, we have found that such oligomers can be addition-polymerised through the olefinic double bond in the maleimide group such that a cross-linked resin which (a) has a good combination of mechanical and thermal properties and (b) is particularly useful as the matrix in fibre-reinforced composites is produced. The addition-polymerisation may be homopolymerisation or may comprise copolymerisation with a suitable addition-polymerisable compound.

The present invention affords the further advantage that the oligomers according to the first aspect thereof, as hereinafter defined, tend to be purer than known maleimide-containing oligomers since the preparation of the present oligomers does not involve chemical reaction on an oligomer. For example, reaction of oligomeric amines with maleimide as described in US 2,444,256 involves the notoriously difficult chemical reaction of substituents on a polymer, i.e. amino groups, with maleic anhydride. Such known chemical reactions lead to a plurality of competing reactions, these give rise to a plurality of products which include one or more with more free amino groups or amic acids than are present in the oligomers according to the first aspect of the present invention.

According to a first aspect of the present invention there is provided an oligomer, the chains of which comprise on average more than one and preferably at least two repeat units of the general formula

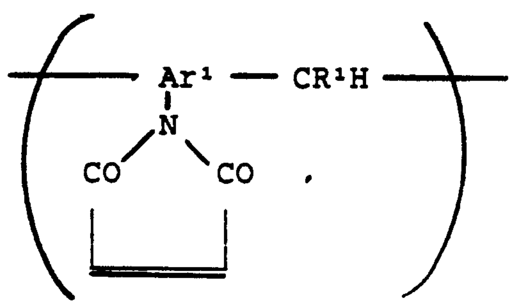 II

Wherein

$Ar^1$ is an aromatic group or a substituted aromatic group as hereinafter defined; and

$R^1$ is hydrogen or a group as hereinafter defined.

Oligomers according to the first aspect of the present invention may be linear or branched.

It is often preferred that the oligomer according to the first aspect of the present invention comprises, in addition to the at least one repeat unit of the general formula II, one or more repeat units of the general formula

$$-\left(Ar^2 - CHR^2\right)- \qquad III$$

wherein $Ar^2$, which may be the same as or different from $Ar^1$, is an aromatic group or a suitably substituted aromatic group;

and

$R^2$, which may be the same as or different from $R^1$, is hydrogen or a hydrocarbyl group.

The presence of one or more residues of the general formula III in an oligomer according to the present invention allows the functionality, as hereinafter defined, of the oligomer to be varied and hence affords a means of adjusting the cross-link density of the cross-linked resin prepared therefrom.

The aromatic groups $Ar^1$ and $Ar^2$ may be mononuclear, e.g. as in phenylene; or fused polynuclear, e.g. as in naphthalene or anthracene or dibenzofuran; or preferably have the structure -Ø-$Y^2$-Ø-. In -Ø-$Y^2$-Ø, Ø is the phenylene group; and $Y^2$ is (i) a direct link between the two phenylene groups or (ii) a divalent residue which includes one or more in-chain atoms, each of which atoms may be carbon or a hetero atom and may have one or more atoms appendant thereto, e.g. -O-, -S-, $-CH_2-$, or a substituted derivative of $-CH_2-$, e.g. --$(CH_3)_2C$-, $-CH_2CH_2-$, or (iii) a residue of general formula IV

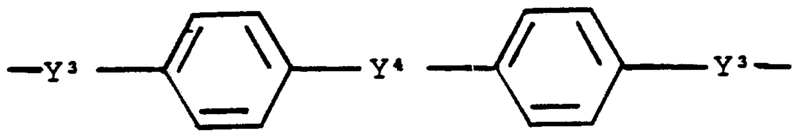

IV

In a residue of the general formula IV, $Y^3$, each of which may be the same or different, is a group which activates the aromatic nucleus to electrophilic attack, e.g. -O-and -S-, and $Y^4$ is a group which deactivates the aromatic nucleus to electrophilic attack, e.g. - $-SO_2-$and -CO-.

Groups of the formula -Ø-$Y^2$-Ø-have the advantage that their presence in oligomers according to the first aspect of the present invention often increase the solubility thereof in solvents used in the preparation of pre-pregs therefrom.

Substituents which may be present on the aromatic groups $Ar^1$ and $Ar^2$ include <u>inter alia</u> lower alkyl groups having up to five carbon atoms, e.g. methyl or ethyl, and, particularly where $Ar^1$ is mononuclear, lower alkoxy groups, e.g. methoxy.

Where oligomers according to the present invention comprise both repeat units II and III, i.e.

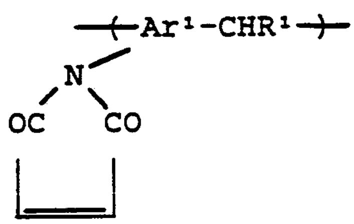

and

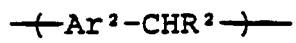

wherein $Ar^1$ and $Ar^2$ are both diphenyl oxide residues and where it is desired that the Tg of the cross-linked product prepared therefrom is above 300°C the molar ratio of $Ar^1$:$Ar^2$ is at least 1:1. Where the molar concentration of the repeat unit II,

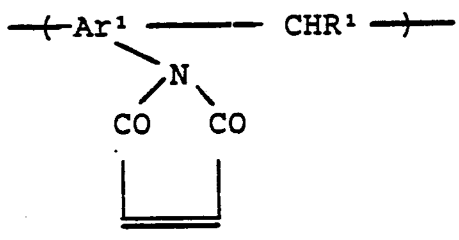

expressed as a percentage of the total molar repeat units, is less than about 35% (where both $Ar^1$ and $Ar^2$ are diphenyl oxide residues) there is a tendency for the Tg of the cross-linked polymer to be too low, e.g. less than 200°C. The molar ratio of $Ar^2$:$Ar^1$, where both are present, is often chosen such that the oligomer on homopolymerisation produces a cross-linked resin of Tg at least about 250°C. The skilled man will readily find by experiment suitable ratios of $Ar^1$:$Ar^2$ to obtain a desired Tg.

Where the groups $R^1$ and $R^2$ are hydrocarbyl groups they may be aryl groups, e.g. phenyl; alkaryl groups, e.g. tolyl; aralkyl groups, e.g. benzyl; or preferably alkyl groups having up to six carbon atoms, e.g. methyl or ethyl. We do not exclude the possibility that $R^1$ and $R^2$ may bear one or more suitable substituents, e.g. halo groups. Preferably, however, both $R^1$ and $R^2$, Where it is present, are hydrogen

atoms.

As a particularly preferred example of $Ar^1$ and $Ar^2$ may be mentioned

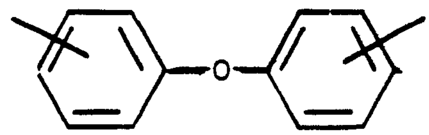

V

Where $Ar^2$ is present in oligomers according to the present invention and where it represents a group of the general formula VI

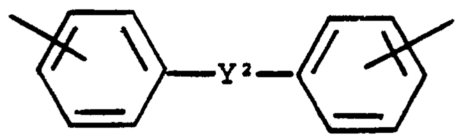

VI

where $Y^2$ has the meaning hereinbefore ascribed to it, the groups $-CHR^1-$and $-CHR^2-$may both be attached to the aromatic rings at positions para to $Y^2$ (hereinafter referred to for convenience as "p/p") or one of the groups may be attached at a position on one aromatic ring which is para to $Y^2$ and the other group may be attached at a position of the other aromatic ring which is ortho to $Y^2$ (hereinafter referred to for convenience as "p/o") or one of the groups may be attached to a position which is ortho to $Y^2$ on one ring and the second group may be attached to a position which is ortho to $Y^2$ on the second ring (hereinafter referred to for convenience as "o/o").

Where $Ar^1$ is $Ø-Y^2-Ø$ then in the repeat units of general formula II, the two links which bind $Ar^1$ into the oligomer backbone are both often on the phenylene group which does not bear the maleimide substituent, e.g. the residue is

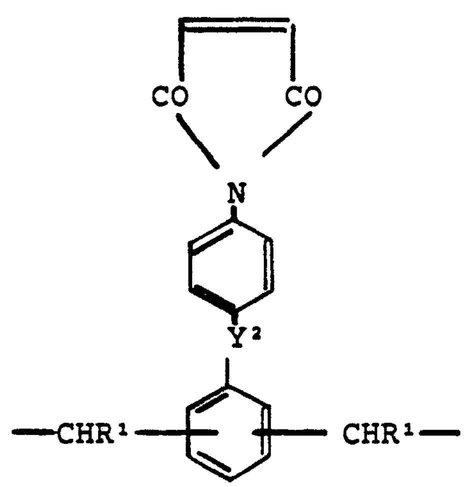

and, where $Y^2$ is oxygen, often a first $-CHR^1-$is bound para to the ether link and the second $-CHR^1-$is bound ortho to the ether link, i.e.

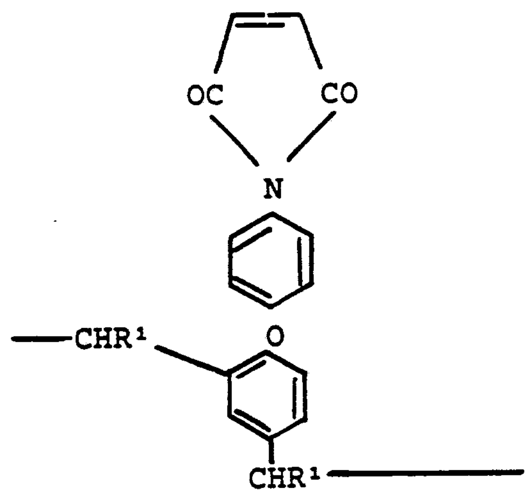

The oligomers according to the first aspect of the present invention are preferably cured to form cross-linked thermoset resins by reaction with an appropriate reagent as is well known in the art, e.g. by reaction of the maleimido groups with a diamine, or more preferably by addition polymerisation of the carbon-carbon double bond of the maleimide residue. Where addition polymerisation is employed it is often preferred that it is homopolymerisation although we do not exclude the possibility that copolymerisation with a vinyl-ended oligomer, or preferably a monomer, may be employed.

The aforesaid polymerisation may be effected by any of the techniques conventionally used in the addition polymerisation of polymerisable olefinically unsaturated monomers. Whilst we do not exclude the possibility that free radical initiation may be used, application of heat is often sufficient to effect polymerisation, although by suitable choice of catalyst it is often possible to effect polymerisation at or near ambient temperature.

Polymerisable olefinically unsaturated comonomers which may be used in admixture and with which the oligomers may be compolymerised include inter alia vinyl esters; aromatic vinyl compounds, vinyl nitriles, and N-aryl maleimides.

Suitable vinyl esters include, for example, vinyl acetate or preferably esters of acrylic and methacrylic acids, which esters may have one or more ester groups, e.g. methyl, cyclohexyl, n-hexyl, and tetrahydrofurfuryl acrylates and methacrylates, ethylene glycol acrylates and methacrylates, di-and triethylene glycol acrylates and methacrylates, and pentaerythritol triacrylate. As examples of suitable aromatic vinyl compounds may be mentioned inter alia styrene and derivatives thereof, e.g. alpha-methyl styrene, and vinyl toluene. Suitable vinyl nitrile compounds include inter alia acrylonitrile and derivatives thereof, e.g. methacrylonitrile. A suitable N-aryl maleimide is N-phenyl maleimide.

Where polymerisable compositions comprise both an oligomer according to the present invention and an olefinically unsaturated comonomer which is polymerisable therewith the weight ratio of the oligomer to the said comonomer tends to be in the range from 1:19 to 19:1. The quantity of polymerisable olefinically unsaturated comonomer which is used will depend on inter alia the viscosity which is required in the polymerisable composition and on the mechanical properties which are required in the cured resin prepared therefrom.

According to a second aspect of the present invention there is provided a process for the preparation of oligomers containing in-chain aromatic residues, particularly oligomers according to the first aspect of the present invention, which process comprises at least the step of reacting one or more suitable aromatic compounds with an aldehyde or ketone in the presence of a suitable acid as hereinafter defined.

By "suitable acid" we mean an acid that (i) is dissolvable homogeneously in the reaction mixture which is used in the process according to the present invention; (ii) is strong; and (iii) has an anion of low nucleophilicity. As examples of suitable acids which may be used in the process according to the present invention may be mentioned inter alia phosphoric acid, methanesulphonic acid, p-toluenesulphonic acid, dichloroacetic acid, or preferably trifluoroacetic acid or more preferably trifluoromethane sulphonic acid (hereinafter referred to for convenience as "triflic acid"). Mixtures of the aforesaid suitable acids may be used.

By "strong" we mean that the acid preferably has an acidity function as measured on the Hammett $H_0$ scale of -3 or more negative than -3.

It is more preferably more negative than -8.

Where the process according to the second aspect of the invention is used to prepare an oligomer according to the first aspect of the present invention the molar ratio of aromatic compound to suitable acid typically is between 50:1 and 10:1 and preferably is about 20:1. It will be appreciated that the specific ratio employed will depend on inter alia the temperature at which the reaction is carried out and the concentration of the reagents. Preferably, the process is carried out under "mild conditions" as hereinafter defined.

Whilst we do not exclude the possibility that the process according to the present invention may be carried out on neat reagents, it is preferably carried out in the presence of a liquid diluent which is chemically inert under the conditions employed in the reaction, more preferably the diluent is a solvent for the aromatic compound, the suitable acid and the oligomer. As examples of suitable diluents may be mentioned inter alia methylene dichloride, or 1,2-dichloroethane. Where an inert diluent which is a solvent for the reactants is employed it tends to afford increased control of the reaction, e.g. to prevent gelation and undesirable side-reactions.

The process according to the second aspect of the present invention may be accelerated by removing the water produced in the reaction by physical means, e.g. azeotroping, or by chemical means, e.g. by reaction with a suitable water-reactive compound, e.g. trifluoroacetic anhydride, acetic ahydride, phosphorus pentoxide, or polyphosphoric acid.

The aromatic compounds used in the process according to the second aspect of the present invention may contain one or more functional substituents, particularly where the presence of such substituents is desirable in the product of the reaction, which substituents should be stable under the reaction conditions used in the process. As examples of such substituents may be mentioned inter alia alkyl, alkoxy, halo and phenoxy.

The oligomers prepared by the process according to the second aspect of the present invention tend to be different from known oligomers prepared from the same starting materials, e.g. by the process described in our aforesaid EPA 0,112,650. Furthermore, the present products often do not contain pendant and/or terminal hydroxyalkyl groups or acylated hydroxyalkyl groups.

Functional or capping groups may be introduced into the oligomers prepared by the process according to the second aspect of the present invention by known reactions. For example, the oligomer may be reacted with formaldehyde and acrylonitrile. Such modified oligomers may then be used to prepare cross-linked resins. It is often preferred that a second aromatic compound of general formula $Ar^2H_2$, is used in the process according to the second aspect of the present invention. $Ar^2$, where $Ar^2H_2$ is used, may be the same as or different from $Ar^1$ of the first aromatic compound and is an aromatic group or a suitably substituted aromatic group.

Where forcing conditions are employed in the process according to the present invention there is a tendency for the maleimide group, where $Ar^1H_2$ bears such a substituent, to be attacked by the aldehyde, accordingly it is preferred to use mild conditions and/or an aryl group which is activated towards electrophilic attack. By "forcing conditions" we mean use of a substantial amount of strong acid (e.g. about 10% w/w) in a solution of at least about 20% aromatic compound or at an elevated temperature, e.g. more than 100°C. By "mild conditions" we mean use of small amounts of strong acid (e.g. 5% w/w) with the reaction carried out in a solution of the aromatic compound, at about 10% say, at up to about 80°C.

$Ar^1H_2$ must be reactive enough (under the particular reaction conditions employed) to react with the aldehyde with substantially no attack on the maleimide residue, i.e. $Ar^1H_2$ has to be reactive towards electrophilic substitution, e.g. it has to be susceptible to attack by alkylating species, e.g. formaldehyde or hydroxymethyl. It will be appreciated that the maleimide residue deactivates to electrophilic substitution the aromatic ring on which it is a substituent, thus it is preferred that the aforesaid aromatic ring also bears a substituent which activates it to electrophilic attack, e.g. an alkoxy or aryloxy substituent (in which case it is the aryl ring of the aryloxy group which reacts with the aldehyde) which substituents are preferably in the ortho position to the maleimide groups in $Ar^1H_2$.

The groups $Ar^1$ and $Ar^2$ in the one or more suitable aromatic compounds which are used in the process according to the second aspect of the present invention may be, for example, fused polynuclear, e.g. as in naphthalene or anthracene or dibenzofuran; or Ph-$Y^2$-Ph in which Ph is the phenyl group and $Y^2$ has the meaning hereinbefore ascribed to it; or mononuclear, e.g. as in benzene, in which case it preferably contains an activating substituent, e.g. an oxyhydrocarbyl group. The aromatic compound may have substituents as hereinbefore described.

Where more than one aromatic compound is used in the process according to the second aspect of the present invention, which aromatic compounds have different reactivities from each other in the aforesaid process, and it is desired that an oligomer of substantially uniform composition is prepared therefrom then

the concentration of the aromatic compounds in the reaction mixture must be kept substantially in balance throughout the reaction, e.g. not all of the more reactive aromatic compound must be present at the start of the reaction. For example, diphenyl oxide reacts far more rapidly with formaldehyde under the reaction conditions than the p-maleimide derivative thereof does, thus in order to obtain a substantially uniform oligomer which contains diphenyl oxide residues and residues of the aforesaid maleimide derivative, the maleimide derivative may be present at the start of the reaction and the diphenyl ether added continuously, or by phased addition, throughout the reaction.

Where more than one aromatic compound is used in the process according to the second aspect of the present invention, which aromatic compounds have substantially the same reactivity as each other in the aforesaid process, and it is desired that an oligomer of substantially uniform composition is prepared therefrom, the concentrations of the aromatic compounds in the reaction mixture may be same throughout the reaction.

As examples of aldehydes which may be used in the process according to the present invention may be mentioned inter alia chloral or fluoral or preferably, formaldehyde.

Whilst we do not exclude the possibility that a solution of formaldehyde in, for example, water or methanol, may be used in the process according to the present invention, preferably the formaldehyde is in a solid form, e.g. paraformaldehyde, or trioxane.

In the process according to the present invention 1 mole of one or more aromatic compounds is treated with about 1.0 to 15 moles, preferably about 2.0 moles, of the one of more adehydes, and about 0.01 to 0.20 moles preferably about 0.05 moles, of the suitable acid. If too much suitable acid is used it is difficult to control the exotherm and gelation occurs.

Conveniently the one or more aromatic compounds may be added to a mixture of the other reactants or the one or more aldehydes may be added to a mixture of the other reactants; with the provisos hereinbefore described.

The process according to the present invention may be carried out for between a few minutes and twenty-four hours. Often, substantially all of the one or more aromatic compounds has reacted within a couple of hours. It will be appreciated that the reaction time will depend on inter alia the reactivity of the aromatic compound in the reaction, the concentration and strength of the suitable acid and the reaction temperature.

When reaction is judged to be complete the product is treated to remove at least substantially all the suitable acid. The presence of residual suitable acid can lead to the production of undesirable side products, with consequent decrease in properties, during production of a cured resin from the oligomer. Removal of the suitable acid from the reaction mixture is conveniently effected by washing with water, or preferably midly alkaline solutions, e.g. bicarbonate, until neutral.

The oligomers of the present invention may be used as the matrices for fibre-reinforced composites. In such composites, suitable fibre reinforcing materials include, for example, glass, e.g. in the form of mat, tapes, continuous fibre or chopped rovings; inorganic mineral fibres; or preferably fibres of suitable high temperature resistant organic fibres, e.g. a polyaromatic amide, e.g. Kevlar (RTM); or more preferably carbon fibre.

Where an oligomer according to the present invention is used as a matrix for a fibre-reinforced composite, such a composite may be produced for example by placing fibres, for example carbon fibres, in a mould of a desired shape and impregnating the fibres with a polymerisable composition which comprises the oligomer. The fibres and the aforesaid polymerisable composition are heated to an appropriate temperature, e.g. 200°C-300°C, often at a pressure of about 200 psi, for typically up to about a few hours, to form a fibre-reinforced composite.

According to a third aspect of the present invention there is provided a fibre-reinforced composite characterised in that the matrix is prepared by curing a polymerisable composition which comprises an oligomer according to the first aspect of the present invention.

Where the aforesaid polymerisable composition is a solid or is very viscous, and is thus not sufficiently fluid for satisfactory impregnation of the fibres, it may be diluted with, e.g. dissolved in, a low boiling solvent, e.g. methylene chloride, in order to provide a mixture of the desired fluidity. The low boiling solvent may be caused or allowed to evaporate before polymerisation is initiated.

The oligomers of the present invention may include inter alia heat and light stabilisers, antioxidants, colouring pigments and particulate filler materials, e.g. chalk, calcium carbonate, talc, mica, carbon black and glass.

The maleimides used in the preparation of oligomers according to the present invention may be prepared by, for example, the method described by Kumar in Chem. and Industry, 21st March 1981, pages 189-191.

Where the oligomers according to the present invention are of low molecular weight, With $M_n$ of less than 1000 and $M_w$ less than 2000, say, they may be separated, for example by column chromatography, into discrete components. For example, discrete so-called "di-maleimides" of general formula VII, "trimaleimides" of general formula VIII and "tetra-maleimides" of general formulae IX and X may be isolated. Such components may be used, either discretely or in admixture with each other, to give, for example, cross-linked products.

By "functionality" of the oligomers according to the first aspect of the present invention, we mean the average number of pendandant and terminal maleimide residues per oligomer chain.

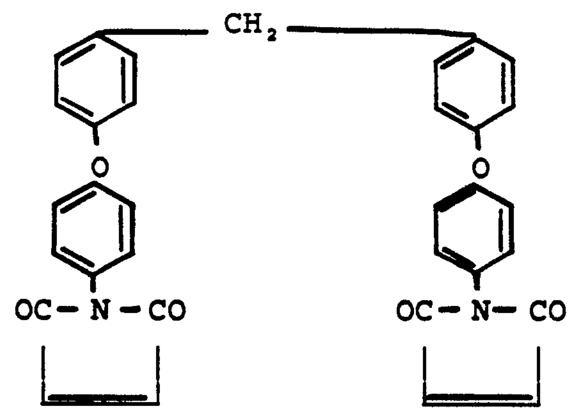

VII

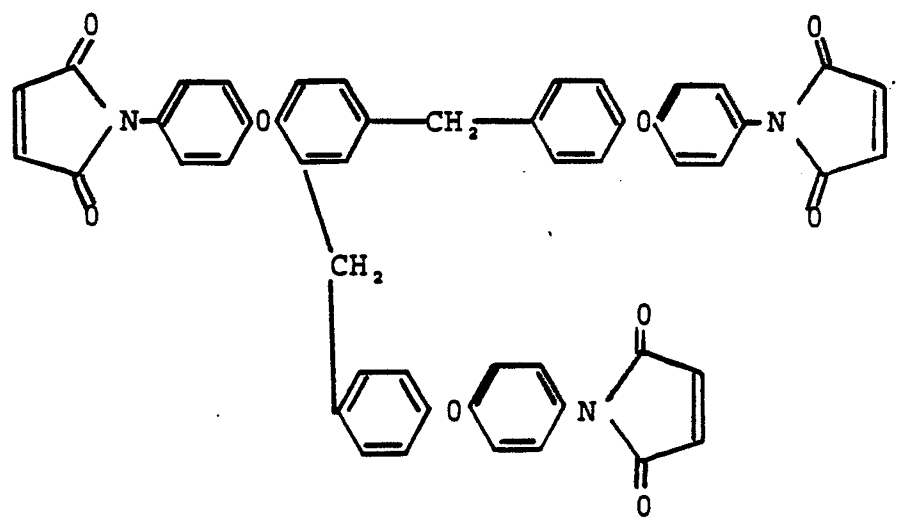

VIII

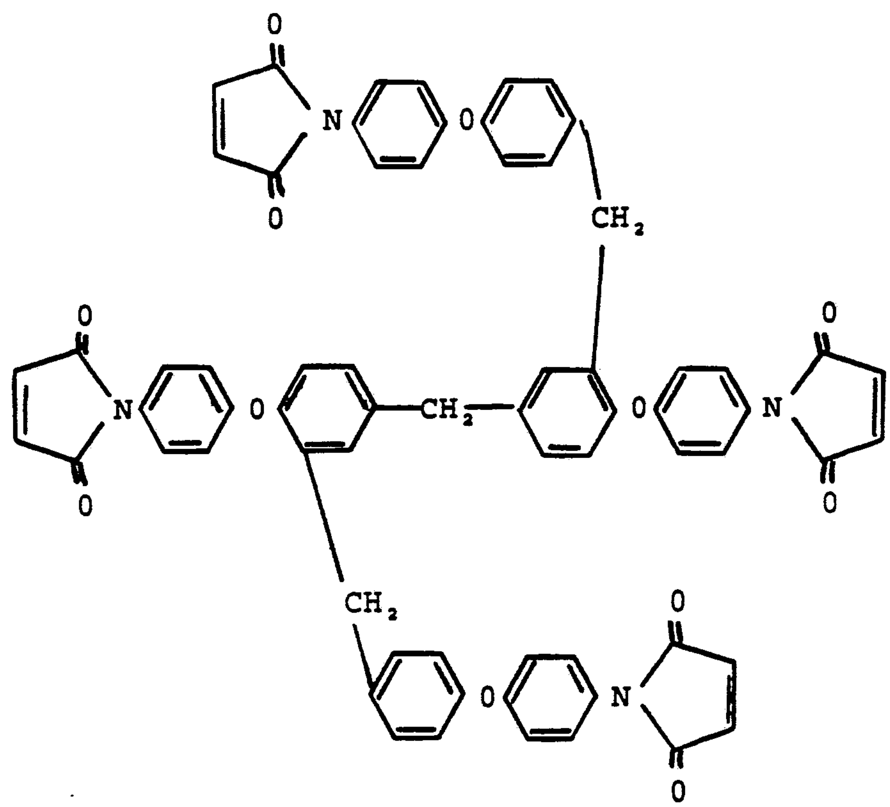

IX

&

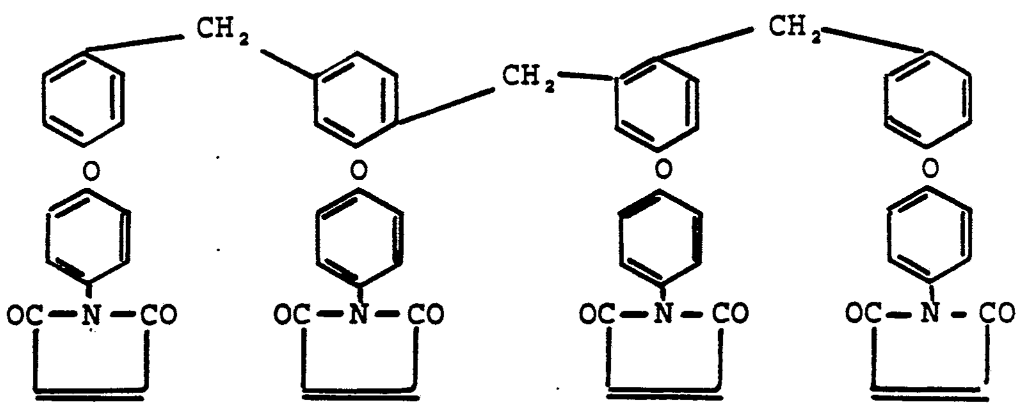

X

In the following Examples:

Molecular Weights were determined using a Waters high pressure liquid chromatograph (h.p.l.c.) Model 840 system with programmable multiwavelength UV detection (Model 490). A 1000A ultrastyragel column was used with chloroform eluent (0.8 $cm^3$/min) and calibrated with polystyrene standards.

Dynamic mechanical thermal analysis was carried out on a Polymer Laboratories DMTA. A sample of length about 5 mm, with single cantilever clamping was heated at 5°C/min in air. A frequency of 0.3Hz and a strain of × 1 were used. A graph of modulus against temperature (°C) was plotted and tangents from the base line and maximum loss curves were extrapolated. The intersection gave the glass transition temperatures (Tg).

Thermogravimetric Analysis was carried out on a Perkin Elmer TGA analyser (Model TG-S2). The samples were heated at 10°C/min in a nitrogen atmosphere, the data was collected and recorded. Graphs were plotted of weight loss v. temperature. The "decomposition onset" lies at the intersection of the extrapolation of the initial steady portion of the weight-loss curve base-line with the steepest portion of the

weight-loss curve.

The present invention is further illustrated by reference to the following Examples but is not limited to thereto.

EXAMPLE 1

This Example illustrates the preparation of an oligomer from naphthalene and paraformaldehyde.

Paraformaldehyde (0.36 moles; 10.8 grams) was added to a mixture of trifluoroacetic acid (0.4 moles; 45.6 grams) and 1.2-dichloroethane (50 ml) at 50°C. Naphthalene (0.06 moles; 7.68 grams) was added, after 10 minutes, to the solution prepared from the above mixture, and the reaction mixture was stirred at 80°C for 2 hours.

Water was added to the reaction mixture and the organic layer was then separated by dissolving in methylene chloride; the methylene chloride solution was washed with aqueous sodium bicarbonate and was dried over molecular sieves (5A).

Evaporation of the methylene chloride left an off-white solid (7.8 grams) which had a softening point above 250°C, an $M_n$ of 2091, and an $M_w$ of 2814. Proton magnetic resonance spectroscopy of the white solid had a signal at 7.4 ppm (aromatic protons) and signals at 4.9 and 4.6 ppm ($Ar-CH_2-Ar$; of $\alpha$, $\alpha'$ and $\alpha$ - $\beta'$ linkages between the naphthalene rings). The infra-red spectrum of the off-white solid indicated the absence of carbonyl (C = O) and ether (C-O) groups. The off-white solid was stable in air to 486°C (TGA heating rate 10°/min).

EXAMPLES 2-4

These Examples illustrate the preparation of oligomers from diphenyl ether and formaldehyde by the process according to the second aspect of the present invention.

General Procedure

Paraformaldehyde was added portion-wise over 5 minutes to a stirred solution of diphenyl ether in trifluoroacetic acid and 1,2-dichloroethane. The mixture was stirred at a desired temperature for a defined time.

The reaction mixture was then worked up as in Example 1.

In Example 4, acetic anhydride (50 grams; 0.05 moles) was added to the reaction mixture after 30 mins and it was then stirred and heated for a further 90 mins. Proton magnetic resonance and infra-red spectroscopy revealed that there were barely detectable levels of acetoxymethyl groups in the product.

TABLE 1

| Example No | Trioxan | | Paraformaldehyde | | Diphenyl ether | | TFA | | DCE | Temp | Time |
|---|---|---|---|---|---|---|---|---|---|---|---|
| | Moles | Grams | Moles | Grams | Moles | Grams | Moles | Grams | (Ml) | (°C) | (Mins) |
| 2 | - | - | 0.3 | 9.0 | 0.1 | 17.0 | 0.42 | 48 | 50 | 44 | 65 |
| 3 | 0.2 | 6 | - | - | 0.1 | 17.0 | 0.22 | 26 | 25 | 30 | 360 |
| 4 | - | - | 1.0 | 3.0 | 0.5 | 85.0 | 1.0 | 114 | 150 | 50 | 30/90 |

TFA: Trifluoroacetic acid
DCE: Dichloroethane

TABLE 2

| Example No | Yield (grams) | Colour | Softening Point (°C) | Mn | Mw | Infra-Red C=0 | $H^1$NMR | | $C^{13}$NMR |
|---|---|---|---|---|---|---|---|---|---|
| | | | | | | | Aromatic | ArCH2/AR | p-p : p-o : o-o |
| 2 | 16 | White Solid | 100 | 3700 | 15000 | 0 | Yes | Yes | 2.86: 1 : 0 |
| 3 | 18 | White Solid | 70 | 1650 | 4981 | 0 | " | " | 10.1 : 3.1 : 1.0 |
| 4 | 86 | White Solid | 60 | 1005 | 2082 | Trace | " | " | 15:8 : 3.9 : 1.0 |

$C^{13}$ NMR showed surprisingly that the product contained no alkyl-ether groups.

The ratios of reactants and reaction conditions are shown in Table 1. The properties of the products are shown in Table 2.

EXAMPLE 5

This Example illustrates the preparation of an oligomer from isodurene and formaldehyde by the process according to the second aspect of the present invention.

Paraformaldehyde (0.075 moles; 2.25 grams) and trifluoromethane-sulphonic acid (0.02 ml) were added to a solution of isodurene (10 grams) in chloroform (50 ml); the isodurene contained 10% durene. The mixture was stirred under reflux for 1 hour.

The reaction mixture was then washed with aqueous bicarbonate and the chloroform was evaporated off; a pale brown solid (11.0 grams) was left. It had $M_n$ of 670, $M_w$ of 1450. The proton magnetic resonance spectrum thereof indicated that no aromatic protons were present, it had signals at 4.18 ppm (ArCHAr), 2.2 ppm (Ar-$CH_3$) and 1.3 ppm (singlet; -$CH_3$). There were no peaks for C-O in the infra-red spectrum of the solid. The lack of aromatic protons suggests that the material is cyclic in structure. This was partly confirmed by the isolation by fractional crystallisation from chloroform of a white crystalline material (25% yield) of the general formula XI from the pale brown solid. The white crystalline material had m.pt. of 440°C (decomposition) by D.S.C. The proton magnetic resonance spectrum thereof had signals at 4.2 ppm (singlet; Ar$CH_2$Ar), 2.48 ppm (singlet) and 2.38 (singlet) both for Ar$CH_3$, and at 1.3 ppm (singlet) for "internal" Ar$CH_3$ in the ratio 2:6:3:3 which are consistent with the structure shown in general formula X1. The mass spectrum of the white crystalline solid had a parent molecular ion at m/e of 584. The structure of the white crystalline solid was further confirmed by X-ray analysis which revealed a saddle conformation with the central methyl groups alternately opposed. The white crystalline solid formed crystalline inclusion complexes with, for example, toluene and chloroform

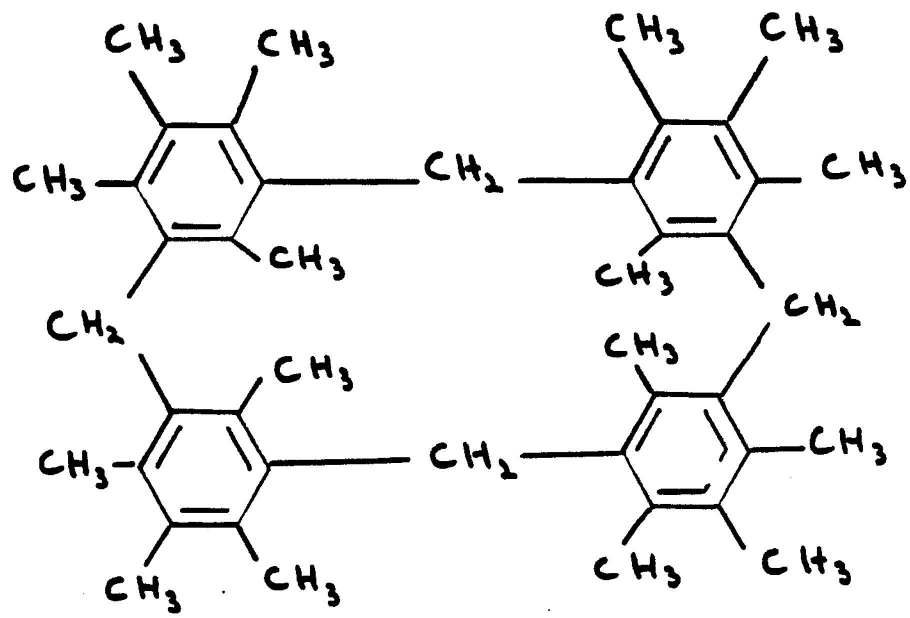

XI

EXAMPLE 6

This Example illustrates the preparation of a co-oligomer by the process according to the second aspect of the present invention.

Paraformaldehyde (9 grams; 0.3 moles) was depolymerised during 10 minutes in trifluoracetic acid (30 ml) at 45°C. Naphthalene (12.8 grams; 0.1 mole) in 1,2-dichloroethane (45 ml) was added, followed by dropwise addition over 55 mins of diphenyl ether (8.5 grams; 0.05 moles) in methylene chloride (15 ml). The reaction was continued for a further 55 mins. The product was a white solid which had $M_n$ of 1611, $M_w$of 2630, a softening point of 140°C and a melting point of 160°C.

## EXAMPLE 7

This Example illustrates the preparation of a ter-oligomer by the process according to the second aspect of the present invention.

The procedure described in Example 6 was repeated except that a mixture of isodurene (0.025 moles) and diphenyl ether (0.025 moles) was used instead of neat diphenyl ether (0.05 moles), together with naphthalene (0.1 mole).

A pale yellow-white oligomeric product was obtained which had $M_n$ of 1824, $M_w$ of 3501, softening point of 190-210°C and melting point of about 220°C.

## EXAMPLE 8

This Example illustrates the preparation of a further ter-oligomer.

The procedure described in Example 7 was repeated except that mesitylene (0.025 moles; 3 grams) was used instead of isodurene (0.025 moles).

An off-white oligomeric product was obtained which had an $M_n$ of 1450, $M_w$ of 3202, a softening point of 180-190°C and a melting point about 220°C.

## EXAMPLE 9

This Example illustrates the preparation of an oligomer by the process according to the second aspect of the present invention.

A solution of trioxane (0.2 moles; 6 grams) in methylene chloride (50 ml) was added to a solution of diphenyl (0.01 moles; 15.4 grams) in trifluoracetic acid (20 grams). On addition of trifluoromethane-sulphonic acid (0.7 grams) a precipitate formed. The reaction mixture was stirred at 40°C for 6 hours, the solid precipitate was filtered off and washed with acetone. The product was off-white in colour; it had $M_n$ of 767 and $M_w$ of 1151 and dissolved in DMSO and Ortho-dichlorobenzene. The $C^{13}$ nuclear magnetic resonance spectrum had signals for aromatic protons and Ar-$\underline{CH_2}$-Ar and indicated a substantially para orientation. It softened at 210°C and melted at about 250°C.

## EXAMPLE 10

This Example illustrates the preparation of an oligomer from diphenyl ether and trichloroacetaldehyde (chloral) by the process acording to the second aspect of the present invention.

A mixture of trifluoracetic acid (25 ml) and trifluoromethane sulphonic acid (0.5 grams) was added to a mixture of diphenyl ether (0.1 mole; 17 grams) and chloral (0.1 mole; 14.7 grams) in dichloromethane (50 ml). The reaction mixture was stirred at room temperature for 14 hours. The reaction mixture was then found to contain a substantial amount of diphenyl ether. The highest molecular weight component in the reaction mixture was a dimer of 1 chloral unit and 2 diphenyl ether units.

Trifluoroacetic anhydride (0.1 mole) was then added to the reaction mixture and stirring was continued for 2 hours. An oligomer was obtained which had $M_n$ of 973 and $M_w$ of 1544. Proton magnetic resonance spectrum of the oligomer had a signal indicating the presence of aromatic protons, a signal at 4.86 ppm indicating the presence of

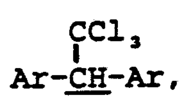

and a minor signal at 5.65 ppm believed to indicate the presence of

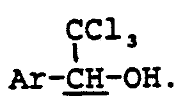

The oligomer was shown by $C^{13}$ nuclear magnetic resonance spectroscopy to be essentially a parasubstituted linear oligomer with p:p to p:o ratio of 26:1. The yield was 28 grams of white solid having a softening point of 140°C.

EXAMPLE 11

This is a comparative test.

Diphenyl ether and chloral were reacted under the conditions described by C. Montaudo (J. Poly. Sci., Poly. Chem. Ed., Vol.II, p65-79, 1973). A significant proportion (about 50%) of the monomer and oligomer was sulphonated. The proton magnetic resonance spectrum of the organic-soluble fraction (i.e. the non-sulphonated fraction) had unassignable signals 2.8 ppm, 3.1 ppm and 5.2 ppm as well as those at 7 ppm (aromatic) and 4.9 ppm (Ar-<u>CH</u>$CCl_3$-Ar).

EXAMPLE 12

This Example illustrates the preparation of an oligomer from diphenyl ether and trifluoroacetaldehyde (Fluoral) by the process according to the second aspect of the present invention.

A mixture of fluoral dihydrate (0.04 moles), trifluoroacetic anhydride (0.08 moles) and trifluoracetic acid (1.0 moles) was added to diphenyl ether (0.1 moles; 1.7 grams) in 1,2-dichloroethane (15 ml). The reaction mixture was refluxed for 3 hours and afforded on work-up a clear glassy resin of $M_n = 606$, $M_w = 1033$ with a softening point of 50°C.

Proton and $C^{13}$ nuclear magnetic resonance spectra confirmed that the resin comprised diphenyl ether residues linked by trifluoromethylmethylene residues in essentially the para position. Orthosubstitution, although present, was too small to be measured quantitatively. Additionally, a small signal in the $H^1$NMR spectrum at 5.6 ppm could be assigned to

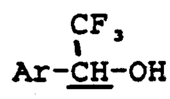

which was again too small to measure quantitatively. The glassy colourless resin was distilled at 0.1 mmHg to give a volatile fraction, boiling at about 200°C and was shown by $H^1$NMR, $C^{13}$NMR and M.S to be a product having the structure shown in formula XII.

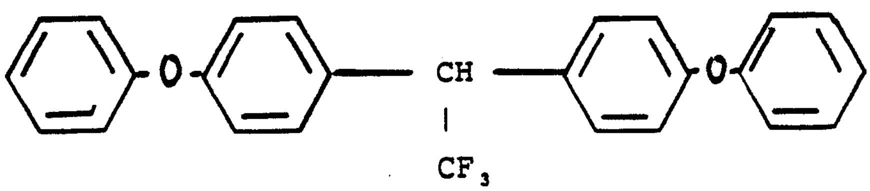

XII

EXAMPLE 13

This Example illustrates the preparation of a bromo-containing oligomer by the process according to the second aspect of the present invention.

Trifluoroacetic anhydride (10 grams), then 1-bromo-naphthalene (10.3 grams; 0.05 moles) in 1,2-dichloroethane (25 ml) and then triflic acid (0.1 grams) were added to paraform (4.5 grams; 0.15 moles) which had been depolymerised in trifluoroacetic acid (22.8 grams; 0.2 moles). The reaction mixture was heated at 75°C for 3 hours, it was then poured into water, extracted with methylene chloride and washed with aqueous sodium bicarbonate. Evaporation of the organic extract gave a resin (11.63 grams) which had a softening point of 150-160°C, an $M_n$ of 800 and an $M_w$ of 1500.

EXAMPLE 14

This Example illustrates the preparation of a co-oligomer by the process according to the second aspect of the present invention.

A solution of naphthalene (0.08 moles; 10.24 grams) in 1,2-dichloroethane (30 ml) was added dropwise over 100 minutes to a mixture of 1-bromo-naphthalene (0.05 moles; 10.3 grams) and paraform (0.3 moles; 9.0 grams) in trifluoroacetic acid (30.6 ml; 0.4 moles) at 80°C. The reaction mixture was heated at 80°C for 2 hours and was then worked up as in Example 13; a resin (19.24 grams) was obtained. This was purified by precipitation of a methylene chloride solution thereof into 40-60 petroleum spirit; an off-white solid softening at 200°C was obtained. This solid had an elemental analysis of C: 82.63%; H: 5.07%; Br: 12.29%; which indicated the absence of oxygen. The analysis is compatible with that of an oligomer with a naphthalene to 1-bromo-naphthalene ratio of about 3:1.

EXAMPLE 15

This example illustrates the preparation of paraphenoxyphenylmaleimide which is useful as a starting material in the preparation of oligomers according to the first aspect of the presen invention.

Maleic anhydride (1.1 mole, 108 grams) in acetone (1200 mls) was added to a stirred acetone solution (1 litre) of 4-aminodiphenyl ether (1.0 mole, 185 grams) while the temperature of the solution was kept at about 0-15°C. A yellow maleamic acid derivative precipitated out. After addition was complete, the reaction mixture was stirred for a further 1 hour at room temperature and a suspension of the precipitate in acetone was obtained.

Acetic anhydride (650 grams) and anhydrous sodium acetate (50 grams) were added to the above suspension and the resulting mixture was heated at reflux for 3 hours.

The resulting solution was poured onto crushed ice, and p-phenoxyphenylmaleimide precipitated. It was filtered off, washed with water and dried. A solid product (225 grams) was obtained which on recrystallisation from chloroform had m.pt. = 165 C.

EXAMPLE 16

This example illustrates the preparation of an oligomer according ro the first aspect of the present invention from the reaction of p-phenoxyphenylmaleimide with formaldehyde.

Triflic acid (0.2 ml) was added to a stirred mixture of p-phenoxyphenylmaleimide (0.113 moles; 30 grams) and paraformaldehyde (0.4 moles; 12 grams) in dried dichloroethane (300. The reaction mixture was then heated at reflux for 2-3 hours.

The resulting solution was washed with 5% sodium carbonate solution, dried, filtered and evaporated to leave a yellow solid oligomer (31 grams) having softening point (Kofler Bar) of 55°C, $M_n$ of about 600 and $M_w$ of about 1100 (by g.p.c.). Gel permeation chromatography indicated that the composition of the oligomer was 6% "p-phenoxyphenylmaleimide" 43% "di-maleimide"; 16% "trimaleimide"; 34% "tetra-maleimide"/ higher oligomers having the structures shown in Figures VII to X. It was soluble in acetone, methyl ethyl ketone, dichloromethane, chloroform, tetrahydrofuran, dioxan and N,N-dimethylformamide. NMR analysis (in $CD_2Cl_2$ at 50°C) revealed a strong maleimide single peak at 6.8 ppm and a broad single peak at 3.9 ppm due to in-chain methylene bridges.

Between 55°C and 200°C the oligomer cured slowly; above 200°C the curing was fast.

A sample of the oligomer was heat-cured in an open mould at 250°C/16 hours and then 300°C/2 hours. DMTA of the cured product gave no indication of a Tg up to 400°C; TGA showed the onset of decomposition at about 440°C.

EXAMPLE 17

This Example illustrates the preparation of an oligomer according to the first aspect of the present invention from 2-methoxyphenylmaleimide and formaldehyde.

Trifluoroacetic acid (2 mls) and triflic acid (0.1 ml) were added to a mixture of 2-methoxyphenylmaleimide (2 grams) and paraformaldehyde (1 gram) in dichloroethane (20 ml) and the mixture was heated to reflux.

After 1 hour, g.p.c. indicated that most of the 2-methoxyphenylmaleimide had been converted into a dimaleimide.

After 2 hours at reflux, further portions of formaldehyde (1 gram), triflic acid (0.1 ml) and dichloroethane (10 mls) were added. After 4 hours at reflux, slow evaporation of water generated in the reaction was started. After 6 hours at reflux, the reaction was stopped and worked up as in Example 16. A pale buff-cream solid product (1.9 grams) was obtained, it had $M_n$ of 750 and $M_w$ of 2000 (by g.p.c.), a softening point of about 115°C (Kofler Bar) and was soluble in the same solvents as described in Example 16. Proton magnetic resonance spectroscopy (in $CDCl_3$) indicated the presence of maleimide groups (large signal at 6.8 ppm) and in-chain $-CH_2-$(signal at 3.9 ppm).

EXAMPLE 18

This Example illustrates the preparation of a higher molecular weight oligomer (than that described in Example 16) according to the first aspect of the present invention from the reaction of p-phenoxyphenylmaleimide and formaldehyde.

Triflic acid (0.3 ml) was added to a mixture of p-phenoxyphenylmaleimide (0.075 mole; 20 grams) and paraformaldehyde (0.33 mole; 10 grams) in dried dichloroethane (200 ml). The reaction mixture was heated at reflux for 2-3 hours, g.p.c. indicated that the $M_n$ of the product was about 700. The water produced as by-product in the reaction was azeotroped over 2 hours with about 50 mls of the dichloroethane. The reaction mixture was worked-up as in Example 16 to leave a yellow/orange solid (21 grams) of $M_n$ 1400 and $M_w$ of 3000 (by g.p.c.), it was a mixture of 2% p-phenoxyphenyl maleimide, 20% "di-maleimide" and 78% "tri-maleimide"/higher molecular weight oligomer. The solubility and the cure characteristics of the solid were the same as those for the product described in Example 16. It had a softening point of about 120°C (Kofler Bar). Proton magnetic resonance spectroscopy (in $CD_2Cl_2$ at 50°C) revealed signals corresponding to the presence of an aromatic complex (centred at 7.1 ppm), maleimide (6.8 ppm), methylene bridge (3.9 ppm) and a very small signal from addition across the maleimide double bond at 3.2 ppm. $C^{13}$ nuclear magnetic resonance spectroscopy confirmed the presence of an intense maleimide signal (133.9 ppm) and three types of methylene bridges (40.2, p-p; 35.2, o-p; and 30.5, o-o) with an integration ratio of 2.9:2.0:1.0.

A sample of the solid was cured in an open mould at 250°C/16 hours and then at 300°C/2 hours. For the cured product, no Tg was observed below 400°C on DMTA; TGA revealed a decomposition onset at 440°C.

EXAMPLES 19-21

These Examples illustrate the preparation of co-oligomers according to the first aspect of the present invention from mixtures of p-phenoxyphenylmaleimide and diphenyl ether with formaldehyde.

The reagents used in the Examples are shown in Table 3. Mixtures A and B were prepared and Mixture B was added to Mixture A over the periods of time shown in Table 3.

In Example 19, further portions (0.5 ml each) of triflic acid were added to the reaction mixture 1.5 and 4 hours after the aforesaid addition was complete. After a further 1 hour, the reaction mixture was distilled slowly to remove water generated during the reaction. 8 hours after the aforesaid addition was complete the reaction was stopped.

The reaction solution was washed with sodium bicarbonate solution, dried, filtered and added dropwise to hexane, a yellow powder was precipitated which, after drying, weighed 12.6 grams, had a softening point of about 85°C (Kofler Bar), an $M_n$ of 1134 and $M_w$ of 4000. It was soluble in the solvents listed in Example 16, it cured very quickly above 200°C.

The yellow powder product was cured in an open mould at 250°C for 16 hours (or at 300° for 2 hours followed by 350°C for 2 hours). DMTA of the cross-linked product showed a sharp drop in modulus at 395°C and TGA indicated a 0.5% weight loss to 350°C and a 30.9% weight loss to 600°C.

In Example 20, further portions of triflic acid

TABLE 3

| Example No | Mixture A | | | | | | Mixture B | | | B was added to A over (hours) |
|---|---|---|---|---|---|---|---|---|---|---|
| | PPM (grams) | Trioxan (gms) | Solvent (ml) | DPO (grams) | T (ml) | Heat temp (°C) | DPO (grams) | T (ml) | Solvent (ml) | |
| 19 | 10.6 | 11 | dried DCE (50) | 0 | 0 | 60-70 | 3.4 | 0.5 | DCE (50) | 0.5 |
| 20 | 132.9 | 70 | dried DCE (800) | 42.5 | 2 | 70 | 42.5 | 0 | DCE (200) | 3 |
| 21 | 5.3 | 3.6 | MC (50) | 0 | 0 | reflux | 6.8 | 0.5 | MC (50) | 1 |

PPM: Phenoxyphenylmaleimide
DPO: Diphenyl oxide
T: Triflic acid
DCE: Dichloroethane
MC: Methylene chloride

(each of 2 ml in dichloroethane (100 ml)) were added to the reaction mixture 1 hour and 2 hours after the aforesaid addition was complete. Three hours after the aforesaid addition was complete, the reaction temperature was raised to 80-85°C to remove water by slow evaporation. After a total reaction time of five hours, the reaction mixture was cooled and it was worked up as in Example 19. A pale yellow powder (190 grams) was obtained, it had a softening point of about 70°C (Kofler Block), an $M_n$ of 1200 and $M_w$ of 4400. It had the same solubility and curing capability as the product of Example 19.

The yellow powder was cured by softening in a mould at about 170°C, then under pressure (4 tons) at 250°/2 hours, then oven cured at 250°C/16 hours and 300°C/3 hours. DMTA of the cross-linked product indicated a Tg at 235°C; TGA indicated a 1% weight loss up to 350°C, a 35% weight loss up to 600°C and

a decomposition onset at 450°C. The cross-linked product had a flexural strength of 60 mPa and a flexural modulus of 3.1 GPa (measured by ASTM D790-71). The $K_{1C}$ was 0.55 $MNm^{-3/2}$ and the $G_{1C}$ was 0.19 $kJm^{-2}$ (ASTM E399-83).

In Example 21, a mixture of triflic acid (0.5 mls) and trioxan (2 grams) in methylene chloride (20 mls) was added to mixture B which comprised diphenyl oxide in methylene chloride. The aforesaid addition was complete after 1 hour. After 4 hours reaction, the reaction mixture was worked up as in Example 19. A yellow powder (8.7 grams) was obtained. It had a softening point of 75°C (Kofler Block), an $M_n$ of 1320 and $M_w$ of 4800 (g.p.c.) and had solubility characteristics and cure properties similar to those of the product prepared in Example 19. A sample of the powder was cured at 250°C/16 hours and then at 300°C/2 hours, the cured product had a Tg of 165°C (by DMTA) and the onset of decomposition was found (by TGA) to be at 430°C.

EXAMPLE 22

This Example describes the preparation of oligomers according to the second aspect of the present invention comprising the aforesaid so-called di-, tri-and tetra-maleimides e.g. of general formulae VII, VIII and IX/X.

A mixture of p-phenoxyphenylmaleimide (40 grams), paraformaldehyde (16 grams), dichloroethane (400 ml) and triflic acid (0.4 ml) was heated at 80°C for 4 hours; g.p.c. analysis indicated that the reaction mixture then contained unreacted p-phenoxyphenylmaleimide (about 10%), "di-maleimide" (about 50%) and high molecular weight products (about 40%). The reaction mixture was quenched with 5% sodium carbonate solution, the organic layer was separated, dried over molecular sieve (5A), and filtered; the filtrate was evaporated to dryness on a rotary evaporator at 40°C; a yellow solid product (42 grams) was obtained.

A portion (17 grams) of the aforesaid product was dissolved in the least amount of chloroform (40 ml) and was added to the top of a chromatography column (14 ins by 1.5 ins) which had been prepared from 120-400 mesh ASTM Kieselgel 60 (ex Merck 9385) in a chloroform/hexane (4/1 by volume) mixture. The column was eluted with a mixture (1.5 litres) of chloroform/hexane (4/1 by volume), then with 2 litre portions of mixtures with decreasing amounts of hexane (e.g. 10/1 then 20/1) and finally pure chloroform, i.e. so-called "gradient elution chromatography". Samples (50-100 $cm^3$) of eluent were collected and analysed on thin layer chromatography plates (Kieselgel 60 F254; Merck 5735) with chloroform/hexane (9/1 by volume) as eluent.

Samples containing substantially pure p-phenoxy phenylmaleimide and di-maleimide were obtained; samples containing tri-maleimide and tetramaleimide contained impurities, these were subjected to a second column chromatography (on a column as described above) and substantially pure tri and tetra-maleimide were obtained. Each material was purified further by dissolving in chloroform and reprecipitating into hexane. The discrete precipitates were filtered, dried and found to yield p-phenoxyphenylmaleimide (1 gram), "di-maleimide" (8 grams), "tri-maleimide" (0.5 grams), and tetra-maleimide" (2 grams). Similar materials were also obtained by subjecting the oligomer prepared in Example 16 to the aforesaid chromatographic separation.

The structures of the aforesaid compounds were confirmed by chemical analysis, infra-red spectroscopy, and proton and $C^{13}$ magnetic resonance spectroscopy (in $CD_2Cl_2$).

Details of the nuclear magnetic resonance spectra of the compounds are shown in Table 6.

The di-, tri-and tetra-maleimides are yellow solids which are soluble in the solvents listed in Example 16. DSC measurements gave the melting point or Tg and the curing conditions listed in Table 4. $T_1$ represents the initiation of curing and $T_2$ represents the termination of curing under the DSC conditions.

TABLE 4

| -Maleimide Sample | M.pt (°C) | Tg (°C) | Cure Onset (°C) | Peak Cure (°C) | T1 cure (°C) | T2 cure (°C) |
|---|---|---|---|---|---|---|
| Di- | 203 | - | 240 | 284 | 226 | 375 |
| Tri- | - | 88 | - | 274 | - | - |
| Tetra- | - | 95 | 236 | 285 | 172 | 345 |

A sample of each compound was cured at 250°C/16 hours and then at 300°C/2 hours in air. DMTA showed no Tg below 400°C. TMA (10°C/minute heating rate) showed no Tg's but revealed the penetration points of the di-and tetra-maleimides to be 420°C and 384°C respectively. DSC gave no indication of any weight loss below 300°C. TGA, as shown in Table 5, revealed that the materials were stable up to about 480°C.

TABLE 5

| -Maleimide Sample | % Weight loss from 30°C-480°C | Onset Temp. of main weight loss (°C) | Temp. of peak of first derivative of weight loss (°C) | Anaerobic char yield N2/600°C (%) |
|---|---|---|---|---|
| Di- | 1.90 | 483 | 491 | 58 |
| Tetra- | 1.65 | 470 | 486 | 66 |

TABLE 6

| Compound | Proton NMR Ratio of Signals | | | | | | Carbon[13] NMR Methylene Bridge signals | | | |
|---|---|---|---|---|---|---|---|---|---|---|
| | Aromatic 7.0 ppm | | Maleimide 6.75 ppm | | Methylene Bridge 3.84 ppm | | Number of signals | ppm | | |
| | Found | Theoretical | Found | Theoretical | Found | Theoretical | | p/p | p/o | o/o |
| Dimer | 8.3 | 8.0 | 2.1 | 2.0 | 1 | 1 | 1 | 40.8 | - | - |
| Trimer | 6.0 | 5.75 | 1.6 | 1.5 | 1 | 1 | 2 | 40.8 | 35.7 | - |
| Tetramer | Aromatic and maleimide protons could not be separately integrated. However, the ratio of "aromatic and maleimide": "methylene bridge" was found to be 6.2:1; the theoretical ratio is 6.33:1. | | | | | | 3 | 40.8 | 35.7 | 30.9 |
| | | | | | | | The integration ratio of these three signals was found to be 3.7:3.3:1. A mixture of compounds having the general formulae X and IX in a weight ratio of 38.62 gives a p/p:p/o:o/:o ratio of 3.7:3.3:1 thus indicating that the Tetramaleimide was a mixture of X and IX in weight ratio of 38:62. Where p/p is a para-para linkage; p/o is a para-ortho linkage; and o/o is an ortho-ortho linkage. | | | |

Example 23

This Example illustrates a fibre reinforced composite according to a third aspect of the present invention.

A sample (90 cms × 45 cms) of plain weave Toray T300(RTM) carbon fibre fabric was impregnated wih a solution of a maleimide oligomer (86g), prepared as in the aforedescribed Example 20, in methylene chloride (200 ml). The pre-preg so prepared was partially dried by standing overnight in a fume-cupboard. Specimens (15 cms × 15 cms) were cut therefrom and dried under vacuum at 60-80°C. The specimens were allowed to cool and then a 12-ply laminate was prepared therefrom between PTFE-coated fabric supported between metal press backing plates. Curing was effected in a pre-heated press (100°C) under the following conditions

(a) heat from 100°C to 190°C at 2°C/min at 60 psi;
(b) hold at 190°C for 4 hours at 200 psi; and
(c) cool from 190°C to room temperature at 2°C/min at 200 psi.

The laminate was cured free-standing in a fan-assisted oven at 240°C for 6 hours and then cooled at 2°C/min. Test strips were cut with a diamond saw and the flexural strength and modulus and interlaminar shear strength (ILSS) were determined under the conditions defined in ASTM D790 and ASTM DD2344 respectively. The results are shown in Table 7.

TABLE 7

| Flexural Strength (MPa) | | Flexural Modulus (GPa) | | ILSS MPa | | |
|---|---|---|---|---|---|---|
| room temp dry | 190°C wet | room temp dry | 190°C wet | room temp dry | 190°C dry | 190°C wet |
| 461 | 370 | 40.4 | 41.8 | 37.5 | 29.8 | 28.3 |
| wet: soaked for 7 days in distilled water at 74°C | | | | | | |

The resin content of the pre-preg (determined under the conditions defined in ASTM D3539) was 47.8% w/w.

**Claims**

1. An oligomer comprising chains which comprise on average more than one repeat unit of the general formula

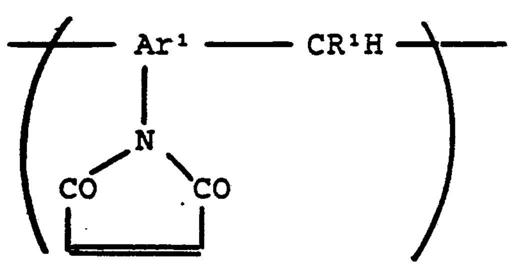

II

wherein
$Ar^1$ is an aromatic group or a substituted aromatic group; and
$R^1$ is hydrogen or a hydrocarbyl group.

2. An oligomer as claimed in claim 1 wherein the chains comprise at least two of the repeat units defined by general formula II.

3. An oligomer as claimed in claim 1 characterised in that there are further repeat units of general formula

$-Ar^2-CHR^2-$ III

in the oligomer chain, wherein:
$Ar^2$, which may be the same as or different from $Ar^1$, is an aromatic group or or a substituted aromatic group; and
$R^2$, which may be the same as or different from $R^1$, is hydrogen or a hydrocarbyl group.

4. An oligomer as claimed in claim 1 wherein

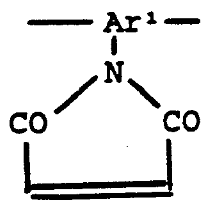 has the general formula 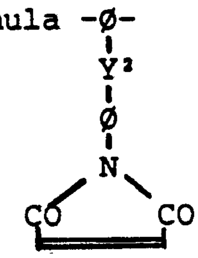

or in claim 3 wherein $Ar^2$ has the general formula

$-Ø-Y^2-Ø-$;

in the said structures:
Ø is the phenylene group; and
$Y^2$ is

(i) a direct link between the two phenylene groups,
(ii) a divalent residue which includes one or more in-chain atoms, or
(iii) a residue of general formula

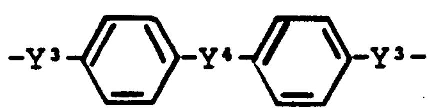 IV

wherein $Y^3$, each of which may be the same or different is a group which activates the phenylene group to electrophilic attack; and
$Y^4$ is a group which deactivates the phenylene group to electrophilic attack.

5. An oligomer as claimed in claim 4 wherein $Y^2$ is oxygen

6. An oligomer as claimed in claim 5 having repeat units of the formula

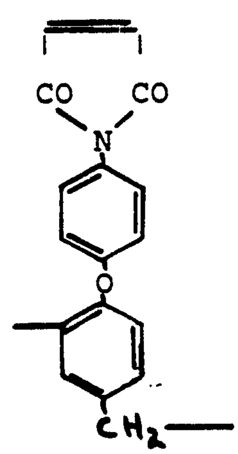

7. An addition polymerisable composition comprising an oligomer as claimed in claim 1 and a monomer copolymerisable therewith.

8. An addition polymerisable composition as claimed in claim 7 characterised in that the monomer is a vinyl ester, an aromatic vinyl compound a vinyl nitride or an N-aryl-maleimide.

9. A cross-linked thermoset resin prepared by addition polymerisation of a polymerisable composition as claimed in claim 7.

10. A fibre reinforced composite characterised in that the matrix is a resin as claimed in claim 9.

11. A process for the preparation of an oligomer containing in-chain aromatic residues which process comprises the step of reacting one or more aromatic compounds with an aldehyde or ketone in the presence of a suitable acid which is dissolvable homogeneously in the reaction mixture, is strong and has an anion of low nucleophilicity.

12. A process as claimed in claim 11 wherein the aromatic compound bears an alkyl, alkoxy, halo or phenoxy substituent.

13. A process as claimed in claim 11 characterised in that it comprises the further step of introducing functional groups into the product of the step defined in claim 11.

14. A process as claimed in claim 11 wherein the one or more aromatic compounds has the general formula

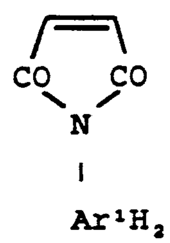

wherein $Ar^1$ has the meaning ascribed to it in claim 1.

15. A process as claimed in claim 14 wherein the molar ratio of suitable acid to the at least one aromatic compound is at least 1:40.

16. A process as claimed in claim 15 carried out under mild conditions as hereinbefore defined.

17. A process as claimed in claim 14 wherein the residue $-Ar^1H_2$ bears a substituent which activates it to electrophilic attack.

18. A process as claimed in claim 11 wherein the aldehyde or ketone comprises formaldehyde.

19. A process as claimed in claim 11 wherein the suitable acid is triflic acid.

20. A process as claimed in claim 11 wherein the molar ration of the at least one aromatic compound: to the one or more aldehydes or ketones: suitable acid is 1: about 2.0:0.05.

21. A process for the preparation of a composite as claimed in claim 10 comprising the steps of impregnating the fibres with an addition polymerisble composition as claimed in claim 7 and curing under suitable conditions.